# EUROPEAN PATENT APPLICATION

(11) **EP 4 773 467 A1**
(43) Date of publication of application: **08.07.2026**
(21) Application number: 25224796.0
(22) Date of filing: 18.12.2025
(51) Int. Cl.: H02J 7/60

(54) **ELECTRONIC DEVICE AND METHOD WITH BYPASS OF ABNORMAL BATTERY**

(30) Priority: 02.01.2025 KR 20250000473
(71) Applicant: Samsung Electronics Co., Ltd., Suwon-si, Gyeonggi-do 16677 (KR)
(72) Inventor: JEON, Jinyong, 16677 Suwon-si, Gyeonggi-do (KR); KIM, Youngjae, 16677 Suwon-si, Gyeonggi-do (KR)
(74) Representative: Kuhnen & Wacker Patent- und Rechtsanwaltsbüro PartG mbB

(57) **Abstract**

An electronic device (100) includes a plurality of batteries (310, 311, 312), a plurality of first switches (330, 331, 332), each of the first switches (330, 331, 332) connected in series with a respective one of the batteries (310, 311, 312), balancing circuits (320, 321, 322), each of the balancing circuits (320, 321, 322) associated with the respective one of the batteries (310, 311, 312), and one or more processors (340) configured to control the first switches (330, 331, 332) and the balancing circuits (320, 321, 322). Each of the balancing circuits (320, 321, 322) includes a second switch and a transformer corresponding to the second switch, and the transformer includes a first coil and a second coil. The transformer is configured to operate in a first state in which a current is induced from the first coil to the second coil or a second state in which the first coil is short circuited, based on a signal transmitted to the second switch.

## Description

### BACKGROUND

### 1. Field

The following examples relate to an electronic device method with bypass of abnormal battery.

### 2. Description of Related Art

Electronic devices, such as electric vehicles, smartphones, and similar systems, may include a plurality of batteries. If an abnormal battery among the plurality of batteries is not detected during operation, the device may be at risk of damage or thermal runaway. Accordingly, when an abnormal battery is identified, it may be necessary to bypass the faulty battery to ensure safe and continued operation of the device.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, an electronic device includes a plurality of batteries; a plurality of first switches, each of the first switches connected in series with a respective one of the batteries; balancing circuits, each of the balancing circuits associated with the respective one of the batteries; and one or more processors configured to control the first switches and the balancing circuits, wherein each of the balancing circuits comprises a second switch and a transformer corresponding to the second switch, wherein the transformer comprises a first coil and a second coil, and wherein the transformer is configured to operate in: a first state in which a current is induced from the first coil to the second coil, and a second state in which the first coil is short circuited, based on a signal transmitted to the second switch.

The one or more processors may be further configured to, in response to detecting a battery among the batteries as abnormal, change a state of a first switch connected in series to the abnormal battery to a turned-off state and change a state of a second switch in a balancing circuit of the abnormal battery to a turned-on state, wherein, in the turned-off state of the first switch and the turned-on state of the second switch, an electrical connection between the abnormal battery and one or more remaining batteries of the batteries is cut off, and an electrical connection is established between the balancing circuit of the abnormal battery and the one or more remaining batteries.

In a charging mode of the electronic device, a charging current may bypass the abnormal battery and flows through the balancing circuit of the abnormal battery; and in a discharge mode of the electronic device, the abnormal battery may be refrained from supplying power to a load.

The bypassing of the abnormal battery may reduce a degradation rate of the abnormal battery.

The one or more processors may be further configured to acquire voltage values of each of the batteries; determine whether the batteries are in an unbalanced state based on the acquired voltage values; and in response to detecting the unbalanced state, transmit a pulse width modulation (PWM) signal to a second switch of a balancing circuit of a first battery having a maximum voltage value among the acquired voltage values.

In the unbalanced state, a second switch of a balancing circuit of each battery other than the first battery may be turned off.

The one or more processors may be further configured to in response to a difference value between the maximum voltage value and a minimum voltage value among the acquired voltage values exceeding a threshold value, determine that the batteries are in the unbalanced state.

The one or more processors may be further configured to estimate a short circuit state of each of the batteries based on sensing data of each of the batteries; and determine a battery as abnormal when a short circuit state of the battery exceeds a threshold level.

The transformer may be in the first state in response to a PWM signal being transmitted to the second switch; and the transformer may be in the second state in response to an ON signal being transmitted to the second switch.

In one general aspect, an electronic device includes a plurality of batteries; a plurality of first switches, each of the first switches connected in series with a respective one of the batteries; balancing circuits, each associated with the respective one of the batteries; and one or more processors configured to control the first switches and the balancing circuits, wherein the one or more processors are further configured to: in response to detecting an abnormal battery among the batteries, change a state of a first switch connected in series to the abnormal battery to a turned-off state; and change a state of a second switch in a balancing circuit of the abnormal battery to a turned-on state, wherein, in the turned-off state of the first switch and the turned-on state of the second switch, an electrical connection between the abnormal battery and one or more batteries other than the abnormal battery is cut off, and an electrical connection between the balancing circuit of the abnormal battery and the one or more batteries is formed.

A first switch connected in series to the one or more batteries may be turned on and a second switch in a balancing circuit of the one or more batteries is turned off.

The one or more processors may be further configured to acquire voltage values of each of the batteries; determine whether the batteries are in an unbalanced state based on the acquired voltage values; and in response to detecting the unbalanced state, transmit a PWM signal to a second switch of a balancing circuit of a first battery having a maximum voltage value among the acquired voltage values.

In the unbalanced state of the batteries, a second switch of a balancing circuit of each battery other than the first battery may be turned off.

The one or more processors may be further configured to in response to a difference value between the maximum voltage value and a minimum voltage value among the acquired voltage values exceeding a threshold value, determine that the batteries are in the unbalanced state.

Each of the balancing circuits may further comprise a transformer including a first coil and a second coil, wherein, a first end of the first coil is connected to a first end of the first switch, and a second end of the first coil is connected to a first end of the second switch.

In a charging operation of the electronic device, a charging current may bypass the abnormal battery and flow through the balancing circuit of the abnormal battery; and in a discharge operation of the electronic device, the abnormal battery may be refrained from supplying power to a load.

The one or more processors may be further configured to: estimate a short circuit state of each of the batteries based on sensing data; and determine the abnormal battery based on the short circuit state exceeding a threshold level.

In a normal state of the batteries, the first switch may be turned on and the second switch of each of the balancing circuits is turned off.

In one general aspect, a processor-implemented or computer-implemented method includes in response to detecting an abnormal battery among a plurality of batteries, changing a state of a first switch connected in series to the abnormal battery to a turned-off state; and changing a state of a second switch in a balancing circuit of the abnormal battery to a turned-on state, wherein, in the turned-off state of the first switch and the turned-on state of the second switch, an electrical connection between the abnormal battery and one or more batteries other than the abnormal battery is interrupted and a bypass path is formed between the balancing circuit of the abnormal battery and the one or more batteries.

A first switch connected in series to the one or more batteries may be turned on and a second switch in a balancing circuit of the one or more batteries may be turned off.

The method may further comprise acquiring voltage values of each of the batteries, determining whether the batteries are in an unbalanced state based on the acquired voltage values; and in response to detecting the unbalanced state, transmitting a PWM signal to a second switch of a balancing circuit of a first battery having a maximum voltage value among the acquired voltage values.

In the unbalanced state of the batteries, a second switch of a balancing circuit of each battery other than the first battery is turned off.

The method further comprises in response to a difference value between the maximum voltage value and a minimum voltage value among the acquired voltage values exceeding a threshold value, determining that the batteries are in the unbalanced state.

Each of balancing circuits, associated with the respective one of the batteries, comprises a transformer including a first coil and a second coil, and a first end of the first coil is connected to a first end of the first switch, and a second end of the first coil is connected to a first end of the second switch.

Other features and aspects will be apparent from the following detailed description, the drawings, and the claims.

### BRIEF DESCRIPTION OF THE DRAWINGS

FIG. 1 illustrates an example electronic device according to one or more embodiments.
FIGS. 2A and 2B illustrate respective example first switch and balancing circuit of an electronic device according to one or more embodiments.
FIG. 3 illustrates an example operation of an electronic device when batteries are in a normal state according to one or more embodiments.
FIG. 4 illustrates an example balancing operation of an electronic device according to one or more embodiments.
FIG. 5 illustrates an example bypass operation of an electronic device according to one or more embodiments.
FIG. 6 illustrates an example battery system according to one or more embodiments.
FIG. 7 illustrates an example mobile device according to one or more embodiments.
FIG. 8 illustrates an example method of an electronic device according to one or more embodiments.

Throughout the drawings and the detailed description, unless otherwise described or provided, the same drawing reference numerals may be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

Throughout the specification, when a component, element, or layer is described as being "on", "connected to," "coupled to," or "joined to" another component, element, or layer it may be directly (e.g., in contact with the other component, element, or layer) "on", "connected to," "coupled to," or "joined to" the other component, element, or layer or there may reasonably be one or more other components, elements, layers intervening therebetween. When a component, element, or layer is described as being "directly on", "directly connected to," "directly coupled to," or "directly joined" to another component, element, or layer there can be no other components, elements, or layers intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C" (e.g., each phrase may include any one of the respective items alone, all of the items listed together, and all possible combinations thereof), and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

Unless otherwise defined, all terms, including technical and scientific terms, used herein have the same meaning as commonly understood by one of ordinary skill in the art to which this disclosure pertains and specifically in the context on an understanding of the disclosure of the present application. Terms, such as those defined in commonly used dictionaries, are to be interpreted as having a meaning that is consistent with their meaning in the context of the relevant art and specifically in the context of the disclosure of the present application, and are not to be interpreted in an idealized or overly formal sense unless expressly so defined herein.

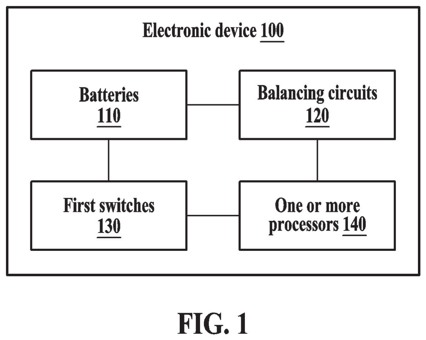

FIG. 1 illustrates an example electronic device according to one or more embodiments.

Referring to FIG. 1, an electronic device 100 may include batteries 110, balancing circuits 120, first switches (or first switch circuits) 130, and one or more processors 140.

The electronic device 100 may correspond to various types of systems, such as an electric vehicle, a hybrid vehicle, an autonomous vehicle, an energy storage system, a robot, a drone, and/or a mobile terminal (e.g., a smartphone, a tablet personal computer (PC), and the like).

According to one or more embodiments, each of the batteries 110 may represent a battery cell. Without being limited thereto, each of the batteries 110 may represent a battery module or a battery pack. The battery module may include multiple battery cells connected in series and/or in parallel. The battery pack may include multiple battery modules connected in series and/or in parallel.

The batteries (e.g., the battery cells, battery modules, or battery packs) 110 may be connected in series.

Each of the first switches 130 may be connected in series with a corresponding one of the batteries 110.

Each of the balancing circuits 120 may be associated with a respective battery 110. Each of the balancing circuits 120 may perform balancing operations (e.g., active balancing). Each of the balancing circuits 120 may include a second switch and a transformer.

In a normal state of the batteries 110, the first switches 130 may be turned on, and the second switches in each of the balancing circuits 120 may be turned off.

The batteries 110 may be in an unbalanced state. The unbalanced state may be defined, for example, as a condition in which a difference value between a maximum voltage value and a minimum voltage value among voltage values of each of the batteries 110 exceeds a predetermined threshold value. In the unbalanced state of the batteries 110, the one or more processors 140 may perform balancing (e.g., active balancing) by activating a balancing circuit of a battery exhibiting the maximum/highest voltage value. The balancing circuit of the battery exhibiting the maximum voltage value may transfer power from the battery with the maximum voltage value to one or more other batteries, thereby bringing the set of batteries 110 into a balanced state.

When an abnormal battery is detected among the batteries 110, the one or more processors 140 may perform a bypass operation for the abnormal battery. The abnormal battery may be, for example, a battery exhibiting internal stress beyond a predetermined level that is estimated (or detected) to be abnormal. The internal stress may include, for example, internal resistance or a short circuit state. In response to detecting an abnormal battery among the batteries 110, the one or more processors 140 may turn off the first switch connected in series with the abnormal battery and turn on the second switch in the associated balancing circuit. As a result, an electrical connection/path between the abnormal battery and the rest of the battery set may be interrupted, and current may be redirected to flow to a balancing circuit of the abnormal battery rather than the abnormal battery. During charging (or a charging mode) of the electronic device 100, a charging current may bypass (not flow into) the abnormal battery, and instead flow through the balancing circuit of the abnormal battery. During discharge (or a discharge mode) of the electronic device 100, the abnormal battery may be prevented from delivering power to the load, and a discharge current from the remaining batteries may continue to flow, using the balancing circuit of the abnormal battery as a bypass path.

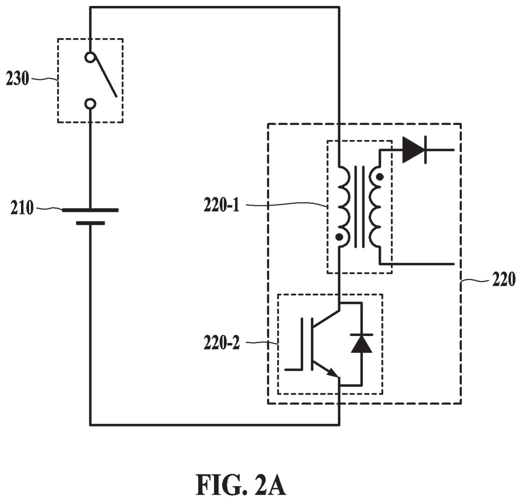

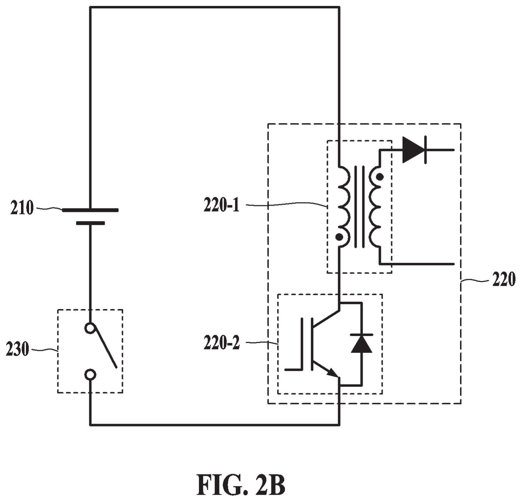

FIGS. 2A and 2B illustrate respective example first switch and balancing circuit of an electronic device according to one or more embodiments.

Referring to FIGS. 2A and 2B, a battery 210, a balancing circuit 220, and a first switch 230 are illustrated.

The description of the balancing circuit 220 may be applied to each of the balancing circuits 120 of FIG. 1. The description of the first switch 230 may be applied to each of the first switches 130 of FIG. 1.

In an example shown in FIG. 2A, the first switch 230 may be connected to a first terminal (e.g., positive terminal) of the battery 210. In an example shown in FIG. 2B, the first switch 230 may be connected to a second terminal (e.g., negative terminal) of the battery 210.

The balancing circuit 220 may include a transformer 220-1 and a second switch 220-2. The second switch 220-2 may include, for example, but is not limited to, a field effect transistor (FET).

The transformer 220-1 may include a first coil (or a first inductor) and a second coil (or a second inductor). In FIG. 2A, a first end of the first coil of the transformer 220-1 may be connected to a first end of the first switch 230, and a second end of the first coil of the transformer 220-1 may be connected to a first end of the second switch 220-2. In FIG. 2B, the first end of the second switch 220-2 may be connected to the first end of the first switch 230.

In the examples shown in FIGS. 2A and 2B, in a normal state of the battery 210, the first switch 230 may be turned on and the second switch 220-2 may be turned off. The one or more processors 140 may control the first switch 230 so that the first switch 230 is turned on. The one or more processors 140 may provide or apply an "on" signal, such as a voltage signal, to the first switch 230 so that the first switch 230 is turned on. When the first switch 230 is turned on and the second switch 220-2 is turned off during charging of the electronic device 100, a charging current may flow to the battery 210. When the first switch 230 is turned on and the second switch 220-2 is turned off during discharge of the electronic device 100, the battery 210 may supply power to the load.

The one or more processors 140 may determine that among the batteries 110, the battery 210 has the maximum voltage value. The one or more processors 140 may determine that the batteries 110 are in an unbalanced state when a difference value between the maximum voltage value and the minimum voltage value exceeds a threshold value. In response, the one or more processors 140 may generate a pulse width modulation (PWM) signal and apply it to the second switch 220-2, causing the second switch 220-2 to repeatedly toggle off and on. The PWM signal may be, for example, a signal having a duty ratio of less than 1 (or less than 100%). When the PWM signal is applied to the second switch 220-2 (or when the second switch 220-2 is repeatedly turned off and on), current (or power) may be induced from the first coil of the transformer 220-1 to the second coil of the transformer 220-1, transferring power from the battery 210 to other batteries.

The one or more processors 140 may determine that the battery 210 is abnormal. In this case, the one or more processors 140 may not provide an on signal to the first switch 230 so that the first switch 230 is turned off, and may provide an on signal to the second switch 220-2 so that the second switch 220-2 is turned on. As will be described later, when an on signal is transmitted to the second switch 220-2, current may flow to the first coil of the transformer 220-1, such that the first coil of the transformer 220-1 may be saturated and the first coil of the transformer 220-1 may be in a short circuit state. In the charging (or a charging mode) of the electronic device 100, the charging current may not be supplied to the battery 210 and may bypass the battery 210 via the balancing circuit. In the discharge (or a discharge mode) of the electronic device 100, the battery 210 may not supply power to the load.

The transformer 220-1 may operate in a first state in which current (or power) is induced from the first coil to the second coil, or in a second state in which the first coil is short circuited, based on a signal transmitted to the corresponding second switch 220-2. For example, the transformer 220-1 may operate in the first state when a PWM signal is transmitted to the corresponding second switch 220-2, and may operate in the second state when an on signal is transmitted to the corresponding second switch 220-2. The "on" signal may be, for example, a signal with a duty ratio of 1.

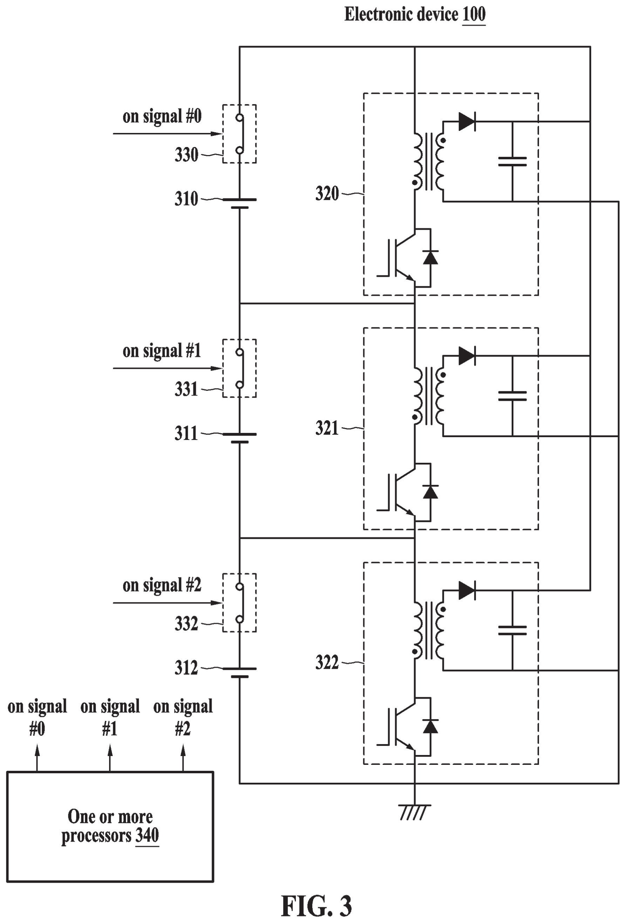

FIG. 3 illustrates an example operation of an electronic device when batteries are in a normal state according to one or more embodiments.

Referring to FIG. 3, the electronic device 100 may include batteries 310, 311, and 312; balancing circuits 320, 321, and 322; first switches 330, 331, and 332; and one or more processors 340.

The batteries 310, 311, and 312 may correspond to the batteries 110 of FIG. 1. Each of the batteries 310, 311, and 312 may correspond to a battery cell, a battery module, and/or a battery pack.

The balancing circuits 320, 321, and 322 may correspond to the balancing circuits 120 of FIG. 1, the first switches 330, 331, and 332 may correspond to the first switches 130 of FIG. 1, and the one or more processors 340 may correspond to the one or more processors 140 of FIG. 1.

FIG. 3 illustrates three batteries 310, 311, and 312, three balancing circuits 320, 321, and 322, and three first switches 330, 331, and 332, but this configuration is merely exemplary, and the number of batteries, the number of balancing circuits, and the number of first switches are not limited to the example illustrated in FIG. 3. The electronic device 100 may include two or more batteries, with a corresponding number of balancing circuits and switches.

In a normal state of the batteries 310, 311, and 312, the one or more processors 340 may turn on the first switch 330 using an "on" signal #0, the first switch 331 using an "on" signal #1, and the first switch 332 using an "on" signal #2.

In a normal state of the batteries 310, 311, and 312, a second switch of the balancing circuit 320 of the battery 310, a second switch of the balancing circuit 321 of the battery 311, and a second switch of the balancing circuit 322 of the battery 312 may be turned off, respectively.

In a charging mode of the electronic device 100, the batteries 310, 311, and 312 may be charged by charging current being supplied to the batteries 310, 311, and 312.

In a discharge mode of the electronic device 100, the batteries 310, 311, and 312 may supply power to the load by outputting current.

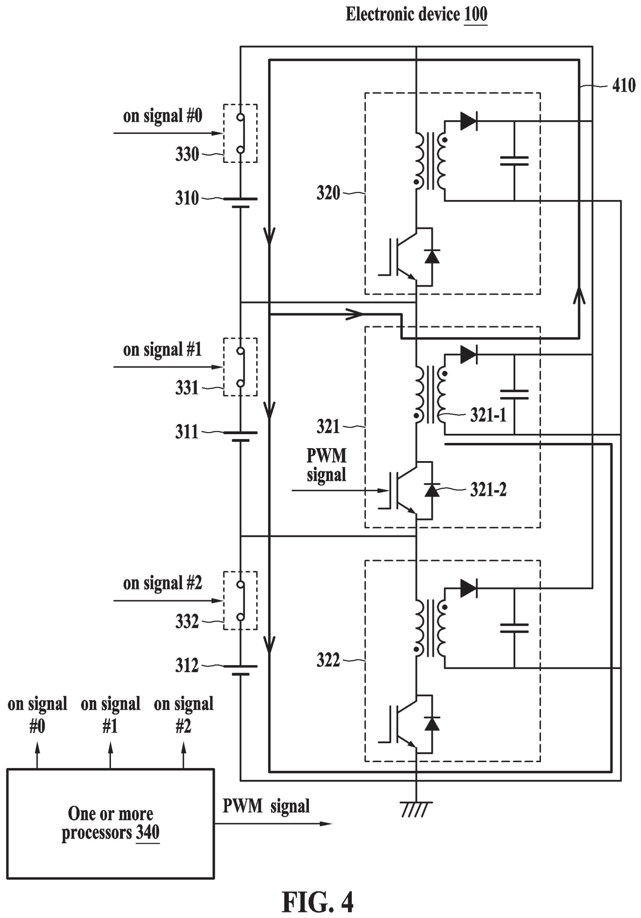

FIG. 4 illustrates an example balancing operation of an electronic device according to one or more embodiments.

Referring to FIG. 4, the one or more processors 340 may turn on the first switch 330 using an "on" signal #0, the first switch 331using an "on" signal #1, and the first switch 332 using an "on" signal #2.

Each of the voltage sensors (not shown) may measure (or sense) the voltage of each of the batteries 310, 311, and 312 to acquire a voltage value (or voltage data) of each of the batteries 310, 311, and 312. Each of the voltage sensors (not shown) may transmit the voltage value of each of the batteries 310, 311, and 312 to the one or more processors 340.

The one or more processors 340 may determine whether a difference value between a maximum voltage value and a minimum voltage value among the voltage values received from the voltage sensors exceeds a threshold value. The one or more processors 340 may determine that the batteries 310, 311, and 312 are in an unbalanced state when the difference value between the maximum voltage value and the minimum voltage value exceeds the threshold value. The one or more processors 340 may determine that the batteries 310, 311, and 312 are in a balanced state when the difference value between the maximum voltage value and the minimum voltage value is less than the threshold value.

In the example illustrated in FIG. 3, the battery 311 may have a maximum voltage value and the battery 310 may have a minimum voltage value. The one or more processors 340 may transmit (or apply) a PWM signal to a second switch 321-2 of the balancing circuit 321 of the battery 311 having the maximum voltage value. A second switch of the balancing circuit 320 of the battery 310 and a second switch of the balancing circuit 322 of the battery 312 may be turned off.

The second switch 321-2 may be repeatedly turned on and off according to the PWM signal, inducing current flow through a first coil of a transformer 321-1. The amount of current flowing in the first coil of the transformer 321-1 may be proportional to the difference value between the maximum voltage value and the minimum voltage value. The greater the difference value between the maximum voltage value and the minimum voltage value, the more current may flow in the first coil of the transformer 321-1. When current flows in the first coil of the transformer 321-1, current may be induced in a second coil of the transformer 321-1 via electromagnetic induction. The more current flows in the first coil of the transformer 321-1, the more current may be induced in the second coil of the transformer 321-1. The difference value between the maximum voltage value and the minimum voltage value may be related to the amount of current induced in the second coil of the transformer 321-1. The current induced in the second coil of the transformer 321-1 may be smoothed using a diode and capacitor in the balancing circuit 321 before being distributed among the batteries 310, 311, and 312 to equalize their voltages, and then the smoothed current may flow to the batteries 310, 311, and 312.

The transformer 321-1 may operate in a first state in which current is induced from the first coil of the transformer 321-1 to the second coil when a PWM signal is transmitted to the corresponding second switch 321-2.

A path 410 shown in FIG. 4 may illustrate current flows during a balancing operation of the electronic device 100. Among the batteries 310, 311, and 312, the voltage of the battery 311 may decrease and the voltages of the battery 310 and the battery 312 may increase due to the balancing operation of the electronic device 100. Accordingly, the batteries 310, 311, and 312 may be in a balanced state.

The one or more processors 340 may not transmit a PWM signal to the second switch 321-2 when the batteries 310, 311, and 312 are in the balanced state. When the batteries 310, 311, and 312 change from an unbalanced state to a balanced state, the second switch 321-2 may be turned off.

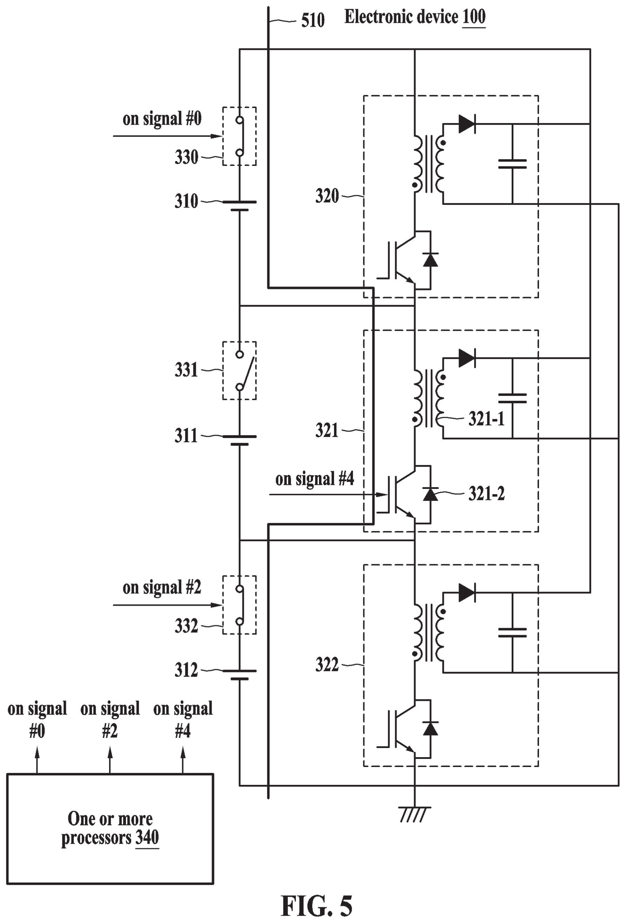

FIG. 5 illustrates an example bypass operation of an electronic device according to one or more embodiments.

In a normal state of the batteries 310, 311, and 312, each of the first switches 330, 331, and 332 may be turned on. The one or more processors 340 may detect the battery 311 among the batteries 310, 311, and 312 is in an abnormal state. In this case, the one or more processors 340 may refrain from transmitting the "on" signal #1 to the first switch 331 of the battery 311. As a result, the first switch 331 may be turned off as shown in FIG. 5, while the first switch 330 and the first switch 312 may be turned on. The disconnection of the first switch 331 may effectively electrically isolate the battery 311 from the battery 310 and the battery 312.

When the battery 311 is detected as an abnormal battery, the one or more processors 340 may transmit (or apply) an "on" signal #4 to the second switch 321-2 of the balancing circuit 321, thereby turning on the second switch 321-2. Here, a second switch of the balancing circuit 320 and a second switch of the balancing circuit 322 may be turned off. Activating (turning on) the second switch 321-2 may establish an electrical connection between the balancing circuit 321 and the battery 310, and an electrical connection between the balancing circuit 321 and the battery 312. These electrical connections may form a bypass path 510 through which current may flow.

In a charging mode of the electronic device 100, a charging current may be prevented from flowing to the battery 311 and instead diverted to the balancing circuit 321. The charging current (e.g., direct current) may continuously flow through the first coil of the transformer 321-1 in the balancing circuit 321. This continuous current may saturate the transformer 321-1 (or the first coil), causing the first coil of the transformer 321-1 to enter a short-circuited state. The charging current may flow to the battery 312 through the transformer 321.

In a discharge mode of the electronic device 100, the battery 310 and the battery 312 may supply power to the load, and the battery 311 may be excluded from the discharge operation (e.g., not supplying power to the load). An output current from the battery 312 may flow to the balancing circuit 321. The output current (e.g., direct current) of the battery 312 may continuously flow to the first coil of the transformer 321-1 in the balancing circuit 321, the transformer 321-1 (or the first coil) may be saturated, and the first coil of the transformer 321-1 may be in a short-circuited state. Consequently, the output current from the battery 312 may flow to the battery 310 through the transformer 321.

The transformer 321-1 may operate in a second state in which the first coil of the transformer 321-1 is short-circuited when the "on" signal (e.g., signal #4) is transmitted to the corresponding second switch 321-2.

In an example, the one or more processors 340 may determine whether each of batteries 310, 311, and 312 is in an internal short circuit state based on sensing data associated with each of the batteries 310, 311, and 312, and may determine whether each of the batteries 310, 311, and 312 is an abnormal battery based on the internal short circuit state of each of the batteries 310, 311, and 312. For example, the one or more processors 340 may estimate an internal short circuit current or an internal short circuit resistance value of each of the batteries 310, 311, and 312 using the sensing data of each of the batteries 310, 311, and 312 and a battery model. The battery model may include, for example, an electrochemical model or a deep learning model. The deep learning model may correspond to a model trained to compute, for example, an estimate of an internal short circuit current or an internal short circuit resistance value. The one or more processors 340 may determine the battery 311 to be an abnormal battery when the estimate of the internal short circuit current of the battery 311 among the batteries 310, 311, and 312 exceeds a threshold current value or the internal short circuit resistance value of the battery 311 exceeds a threshold resistance value.

When the one or more processors 340 determines that the battery 311 is an abnormal battery, the one or more processors 340 may bypass the battery 311 by turning off the first switch 331 and turning on the second switch 321-2 of the balancing circuit 321. When the battery 311 is not bypassed, the battery 311 may supply current to the load and receive the charging current, potentially accelerating degradation. Here, the degradation rate may be a rate at which the battery 311 is degraded. In an example, the battery 311 may not supply current to the load due to the bypass, and no charging current may flow to the battery 311. By bypassing the battery 311, both load current and charging current are prevented from flowing through the battery 311, thereby reducing its degradation rate. Additionally, the progression of the internal short-circuit of the battery 311 may be halted or slowed.

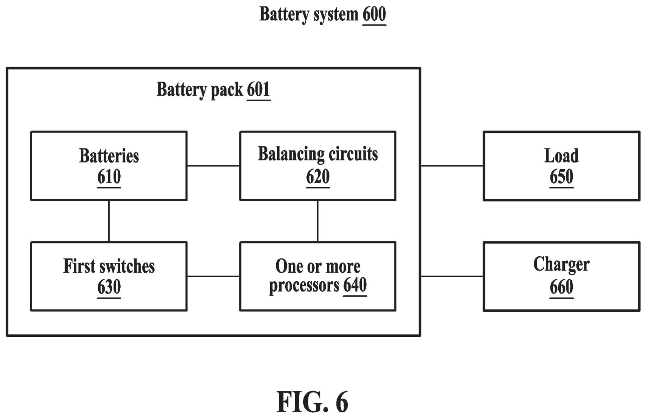

FIG. 6 illustrates an example battery system according to one or more embodiments.

Referring to FIG. 6, a battery system 600 may include a battery pack 601, a load 650, and a charger 660. The load 650 may correspond to a component or a device (e.g., a motor, an inverter, and the like) that uses batteries 610 (e.g., battery cells or battery modules) within the battery pack 601 as a power source, for example. The charger 660 may include, but is not limited to, an on-board charger. In one or more embodiments, the load 650 and/or the charger 660 may be omitted from the battery system 600.

The battery system 600 may be implemented in various types of devices such as electric vehicles, hybrid vehicles, autonomous vehicles, energy storage systems, mobile robots, drones, and mobile devices (e.g., smartphones, tablet PCs, etc.).

The battery pack 601 may include batteries 610, balancing circuits 620, first switches 630, and one or more processors 640. According to one or more embodiments, the balancing circuits 620, the first switches 630, and the one or more processors 640 may be collectively implemented as a battery management apparatus or battery control apparatus.

The respective descriptions of the balancing circuits 120 (e.g., the balancing circuits 320, 321, and 322), the first switches 130 (e.g., the first switches 330, 331, and 332), and the one or more processors 140 (e.g., the one or more processors 340) may similarly apply to the balancing circuits 620, the first switches 630, and the one or more processors 640.

Each of the balancing circuits 620 may include a second switch (e.g., the second switch 220-2 of FIG. 2) and a transformer (e.g., the transformer 220-1 of FIG. 2).

The charger 660 may receive power from an external power source (e.g., a wired or wireless power source) and may charge the batteries 610 based on the received power.

Each of the first switches 630 may be connected in series to a respective one of the batteries 610.

In a normal state of the batteries 610, the first switches 630 may be turned on, and the second switches of each of the balancing circuits 620 may be turned off. In a charging mode of the battery pack 601, the batteries 610 may be charged by a charging current from the charger 660. In a discharge mode of the battery pack 601, the batteries 610 may supply electrical power to the load 650 (e.g., a motor, an inverter, etc).

The one or more processors 640 may determine that the batteries 610 are in an unbalanced state when a difference value between a maximum voltage value and a minimum voltage value of each of the batteries 610 exceeds a threshold value. In such cases, the one or more processors 640 may transmit a PWM signal to a second switch of a balancing circuit of a battery having the maximum voltage value so that balancing may be performed to resolve the unbalanced state. In this state, the first switches 630 may be turned on, and the second switches of the balancing circuits of each of the remaining batteries except for the battery having the maximum voltage value may be turned off.

When an abnormal battery is detected among the batteries 610, the one or more processors 640 may turn off a first switch connected in series to the abnormal battery and turn on a second switch in a balancing circuit of the abnormal battery. As a result, the abnormal battery may be electrically isolated from the remaining batteries within the battery pack 601. In the charging mode, the charging current from the charger 660 may not be supplied to the abnormal battery, so the abnormal battery may not be charged. In the discharge mode, current may bypass the abnormal battery and instead flow through the balancing circuit of the abnormal battery, allowing the remaining batteries to supply power to the load 650.

In one or more embodiments, when an electric or autonomous vehicle including the battery system 600 detects an abnormal battery among the batteries 610 while driving, the power supply operation of the battery pack 601 may continue using the remaining batteries, excluding the abnormal battery. Accordingly, the electric or autonomous vehicle including the battery system 600 may perform fail-safe operation without interrupting power delivery to the vehicle systems when an abnormal battery is detected.

The one or more processors 640 may determine a state of charge (SOC) of the battery pack 601 based on any one or any combination of two or more of a voltage value of each of the batteries 610, a current value (or a current value of each of the batteries 610) of the battery pack 601, and a temperature value of each of the batteries 610.

The battery pack 601 may include a memory (not shown), and a battery model (e.g., an electrochemical model, a deep learning model, and the like) may be stored in the memory of the battery pack 601. The one or more processors 640 may estimate an internal short circuit state of each battery 610 using the battery model along with any one or any combination of two or more of the voltage value of each of the batteries 610, the current value (or the current value of each of the batteries 610) of the battery pack 601, and the temperature value of each of the batteries 610. Based on the estimated internal short circuit state, the one or more processors 640 may determine whether there is an abnormal battery among the batteries 610. The one or more processors 640 may estimate a state of health (SOH) of each of the batteries 610 (or an SOH of the battery pack 601 as a whole) using the battery model along with any one or any combination of two or more of the voltage value of each of the batteries 610, the current value of the battery pack 601, and the temperature value of each of the batteries 610. The SOH of each of the batteries 610 (or the SOH of the battery pack 601) may represent a degree of degradation of each battery 610 compared to its initial condition at the time of manufacture.

The electronic device described through FIGS. 1 through 5 may be implemented within the battery system 600 (or the battery pack 601) of FIG. 6.

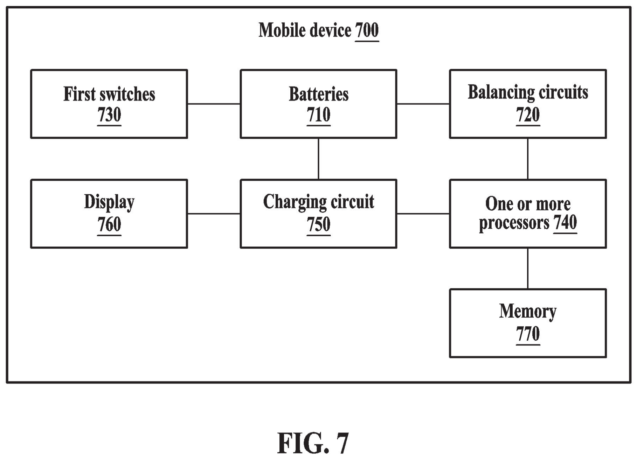

FIG. 7 illustrates an example mobile device according to one or more embodiments.

Referring to FIG. 7, a mobile device 700 (or an electronic device) may include batteries 710, balancing circuits 720, first switches 730, one or more processors 740, a charging circuit 750 (e.g., a power management integrated circuit (PMIC)), a display 760, and a memory 770. Although not illustrated in FIG. 7, the mobile device 700 may further include additional components such as a wireless communication circuit capable of performing wireless communication (e.g., for 4G, 5G, or Wi-Fi), a camera, a speaker, and the like.

The mobile device 700 may correspond to a smartphone (e.g., a bar-type or foldable), a tablet PC, a laptop, a smartwatch, a smart band, or smart glasses.

The memory 770 may store instructions executable by the one or more processors 740. The one or more processors 740 may control the operations of the first switches 730 and the balancing circuits 720, and may be electrically connected to the charging circuit 750.

The descriptions of the balancing circuits 120 (e.g., the balancing circuits 320, 321, and 322), the first switches 130 (e.g., the first switches 330, 331, and 332), and the one or more processors 140 (e.g., the processor 340) may similarly apply to the balancing circuits 720, the first switches 730, and the one or more processors 740, respectively.

Each of the balancing circuits 720 may include a second switch (e.g., the second switch 220-2 of FIG. 2) and a transformer (e.g., the transformer 220-1 of FIG. 2).

Each transformer may operate in a first state, in which current is induced from a first coil of the transformer to a second coil of the transformer, or in a second state, in which the first coil is short circuited, based on a signal transmitted to the corresponding second switch. For example, the transformer may be in the first state when a PWM signal is transmitted to the corresponding second switch, and may be in the second state when an "on" signal is transmitted to the corresponding second switch.

Each of the first switches 730 may be connected in series to a corresponding one of the batteries 710.

The charging circuit 750 may receive power from an external power source (e.g., a wired or a wireless power source) and charge the batteries 710 based on the received power. The charging circuit 750 may supply power to various components (e.g., the one or more processors 740, display 760, memory 770) of the mobile device 700 using the batteries 710.

The one or more processors 740 may detect an abnormal battery among the batteries 710. In such cases, the one or more processors 740 may not transmit an "on" signal to the first switch connected in series to the abnormal battery so that the first switch connected in series to the abnormal battery is turned off. The one or more processors 740 may display a message on the display 760 indicating that an abnormal battery has been detected. The charging circuit 750 may supply power to the components of the mobile device 700 using the remaining batteries except for the abnormal battery.

The one or more processors 740 may determine that the batteries 710 are in an unbalanced state when a difference value between a maximum voltage value and a minimum voltage value of each of the batteries 710 exceeds a threshold value. In such cases, the one or more processors 740 may transmit a PWM signal to the second switch of the balancing circuit of the battery having the maximum voltage value, thereby enabling the power of the battery having the maximum voltage value to be transmitted to the remaining batteries.

The one or more processors 740 may determine state information (e.g., the SOC and/or SOH) of the batteries 710 using sensing data (e.g., one or more of a voltage value, a current value, and a temperature value) of each of the batteries 710. In one or more embodiments, the memory 770 may store a battery model (e.g., an electrochemical model, and/or an artificial neural network model). The one or more processors 740 may determine the state information of the batteries 710 using the sensing data of each of the batteries 710 along with the battery model. The determined state information may correspond to, for example, an average value, a maximum value, or a minimum value of the state information of each of the batteries 710. For example, the SOC of the batteries 710 may correspond to an average value, a maximum value, or a minimum value of the SOC of each of the batteries 710. The one or more processors 740 may display the state information of the batteries 710 on the display 760.

The electronic device described in FIGS. 1 through 5 may be implemented within the mobile device 700 illustrated in FIG. 7.

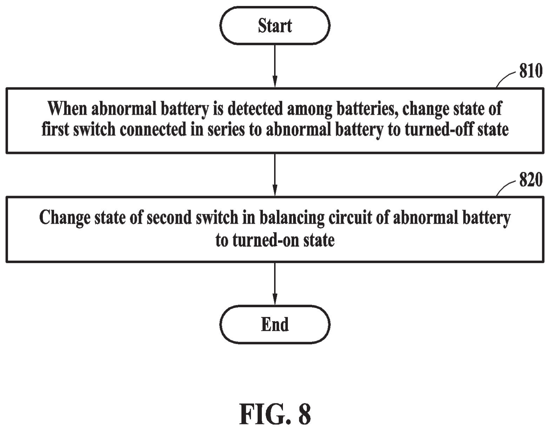

FIG. 8 illustrates an example operating method of an electronic device according to one or more embodiments.

Referring to FIG. 8, in operation 810, when the electronic device 100 detects an abnormal battery among the batteries, the electronic device 100 may change a state of a first switch connected in series to the abnormal battery to a turned-off state. For example, the electronic device 100 may estimate a short circuit state (e.g., an internal short circuit state) of each battery based on sensing data of each battery, and may determine a battery (e.g., a battery having an estimate of an internal short circuit current exceeding a threshold current value or a battery having an internal short circuit resistance value exceeding a threshold resistance value) having a short circuit state exceeding a threshold level to be an abnormal battery.

In operation 820, the electronic device 100 may change a state of a second switch in a balancing circuit of the abnormal battery to a turned-on state.

The first switch connected in series with the abnormal battery may be turned off, and the second switch in the balancing circuit of the abnormal battery may be turned on. An electrical connection between another battery and the abnormal battery may be cut off. A first switch connected in series with another battery may be turned on, and a second switch in the balancing circuit of the other battery may be turned off. When the second switch in the balancing circuit of the abnormal battery is turned on, current may flow into the balancing circuit of the abnormal battery. When current continues to flow through a transformer in the balancing circuit of the abnormal battery, the transformer may become saturated, causing current to flow to other batteries.

In one or more embodiments, the electronic device 100 may acquire voltage values of each of the batteries and determine whether the batteries are in an unbalanced state based on the obtained voltage values. For example, the electronic device 100 may determine that the batteries are in an unbalanced state when a difference value between a maximum voltage value and a minimum voltage value among the acquired voltage values exceeds a threshold value. The electronic device 100 may transmit a PWM signal to a second switch of a balancing circuit of a first battery having the maximum voltage value among the acquired voltage values when the batteries are in the unbalanced state. In the unbalanced state of the batteries, second switches in balancing circuits of the remaining batteries may be turned off.

In one or more embodiments, in a normal state of the batteries, the first switches may be turned on and the second switches of the balancing circuits may be turned off.

The description provided with reference to FIGS. 1 through 7 may apply to the operating method of the electronic device of FIG. 8.

The electronic devices, computing devices, processors, memory, storage devices, device 100/700, batteries 110/210/310/311/312/610/710, circuits 120/220/320/321/322/620/720/750, switches 130/230/330/331/332/630/730, processors 140/340/640/740, memory 603/770, load 650, charger 660, display 760, and other apparatuses, devices, and components described herein with respect to FIGS. 1-8 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-8 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software include higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as a multimedia card or a micro card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

## Claims

1. An electronic device, comprising:
a plurality of batteries (110, 210, 310, 311, 312, 610, 710);
a plurality of first switches (130, 230, 330, 331, 332, 630, 730), each of the first switches connected in series with a respective one of the batteries (110, 210, 310, 311, 312, 610, 710);
a plurality of balancing circuits (120, 220, 320, 321, 322, 620, 720), each of the balancing circuits associated with the respective one of the batteries (110, 210, 310, 311, 312, 610, 710); and
one or more processors (140, 340, 640, 740) configured to control the first switches (130, 230, 330, 331, 332, 630, 730) and the balancing circuits (120, 220, 320, 321, 322, 620, 720),
wherein each of the balancing circuits (120, 220, 320, 321, 322, 620, 720) comprises a second switch (220-2, 321-2) and a transformer (220-1, 321-1) corresponding to the second switch (220-2, 321-2),
wherein the transformer (220-1, 321-1) comprises a first coil and a second coil, and
wherein the transformer (220-1, 321-1) is configured to operate in:
a first state in which a current is induced from the first coil to the second coil, and
a second state in which the first coil is short circuited,
based on a signal transmitted to the second switch (220-2, 321-2).

2. The electronic device of claim 1, wherein the one or more processors (140, 340, 640, 740) are further configured to,
in response to detecting a battery among the batteries (110, 210, 310, 311, 312, 610, 710) as abnormal, change a state of a first switch connected in series to the abnormal battery to a turned-off state and change a state of a second switch in a balancing circuit of the abnormal battery to a turned-on state,
wherein, in the turned-off state of the first switch and the turned-on state of the second switch, an electrical connection between the abnormal battery and one or more remaining batteries of the batteries (110, 210, 310, 311, 312, 610, 710) is cut off, and an electrical connection is established between the balancing circuit of the abnormal battery and the one or more remaining batteries.

3. The electronic device of claim 2, wherein,
in a charging mode of the electronic device, a charging current bypasses the abnormal battery and flows through the balancing circuit of the abnormal battery; and
in a discharge mode of the electronic device, the abnormal battery is refrained from supplying power to a load (650).

4. The electronic device of claim 2 or 3, wherein the bypassing of the abnormal battery reduces a degradation rate of the abnormal battery.

5. The electronic device of any one of claims 1 to 4, wherein the one or more processors (140, 340, 640, 740) are further configured to,
acquire voltage values of each of the batteries (110, 210, 310, 311, 312, 610, 710);
determine whether the batteries (110, 210, 310, 311, 312, 610, 710) are in an unbalanced state based on the acquired voltage values; and
in response to detecting the unbalanced state, transmit a pulse width modulation, PWM, signal to a second switch of a balancing circuit of a first battery having a maximum voltage value among the acquired voltage values.

6. The electronic device of claim 5, wherein, in the unbalanced state, a second switch of a balancing circuit of each battery other than the first battery is turned off.

7. The electronic device of claim 5 or 6, wherein the one or more processors (140, 340, 640, 740) are further configured to,
in response to a difference value between the maximum voltage value and a minimum voltage value among the acquired voltage values exceeding a threshold value, determine that the batteries (110, 210, 310, 311, 312, 610, 710) are in the unbalanced state.

8. The electronic device of any one of claims 1 to 7, wherein the one or more processors (140, 340, 640, 740) are further configured to,
estimate a short circuit state of each of the batteries (110, 210, 310, 311, 312, 610, 710) based on sensing data of each of the plurality of batteries (110, 210, 310, 311, 312, 610, 710); and
determine a battery as abnormal when a short circuit state of the battery exceeds a threshold level.

9. The electronic device of any one of claims 1 to 8, wherein:
the transformer (220-1, 321-1) is in the first state in response to a PWM signal being transmitted to the second switch (220-2, 321-2); and
the transformer (220-1, 321-1) is in the second state in response to an ON signal being transmitted to the second switch (220-2, 321-2).

10. A processor-implemented method, comprising:
in response to detecting an abnormal battery among a plurality of batteries (110, 210, 310, 311, 312, 610, 710),
changing (810) a state of a first switch connected in series to the abnormal battery to a turned-off state; and
changing (820) a state of a second switch in a balancing circuit of the abnormal battery to a turned-on state,
wherein, in the turned-off state of the first switch and the turned-on state of the second switch, an electrical connection between the abnormal battery and one or more batteries other than the abnormal battery is interrupted and a bypass path is formed between the balancing circuit of the abnormal battery and the one or more batteries.

11. The method of claim 10, wherein a first switch connected in series to the one or more batteries is turned on and a second switch in a balancing circuit of the one or more batteries is turned off.

12. The method of claim 10 or 11, further comprising:
acquiring voltage values of each of the batteries (110, 210, 310, 311, 312, 610, 710);
determining whether the batteries (110, 210, 310, 311, 312, 610, 710) are in an unbalanced state based on the acquired voltage values; and
in response to detecting the unbalanced state, transmitting a PWM signal to a second switch of a balancing circuit of a first battery having a maximum voltage value among the acquired voltage values.

13. The method of claim 12, wherein, in the unbalanced state of the batteries (110, 210, 310, 311, 312, 610, 710), a second switch of a balancing circuit of each battery other than the first battery is turned off.

14. The method of claim 12 or 13, further comprising:
in response to a difference value between the maximum voltage value and a minimum voltage value among the acquired voltage values exceeding a threshold value, determining that the plurality of batteries are in the unbalanced state.

15. The method of any one of claims 10 to 14, wherein each of balancing circuits (120, 220, 320, 321, 322, 620, 720), associated with the respective one of the plurality of batteries (110, 210, 310, 311, 312, 610, 710), comprises a transformer (220-1, 321-1) including a first coil and a second coil, and
wherein, a first end of the first coil is connected to a first end of the first switch, and a second end of the first coil is connected to a first end of the second switch.
